# EUROPEAN PATENT SPECIFICATION

(11) **EP 2 873 250 B1**
(45) Date of publication and mention of the grant of the patent: **05.09.2018**
(21) Application number: 13736900.5
(22) Date of filing: 11.07.2013
(51) Int. Cl.: H04Q 1/02

(54) **RFID VISUAL INDICATOR IN A PHYSICAL LAYER MANAGEMENT SYSTEM**
VISUELLER RFID-INDIKATOR IN EINEM PLM-SYSTEM
INDICATEUR VISUEL RFID DANS UN SYSTÈME DE GESTION DE COUCHE PHYSIQUE

(30) Priority: 11.07.2012 US 201261670474 P
(43) Date of publication of application: 20.05.2015
(73) Proprietor: Tyco Electronics UK Ltd., Swindon, Wiltshire SN3 5HH (GB); Tyco Electronics Raychem BVBA, 3010 Kessel-Lo (BE)
(72) Inventor: STANDISH, Ian Miles, Flint Flintshire North Wales CH65TP (GB); MATHER, David, Altrincham Cheshire WA15 9QW (GB); VASTMANS, Kristof, B-3370 Boutersem (BE); JEURIS, Kristof Johan, B-3000 Leuven (BE); LAMBOURN, Stephen, Swindon Wiltshire SN25 3HH (GB)
(74) Representative: Grünecker Patent- und Rechtsanwälte PartG mbB
(86) International application number: PCT/EP2013/064722
(87) International publication number: WO 2014/009489

(56) References cited:
- US-A1- 2008 220 721
- US-A1- 2011 008 996

## Description

### BACKGROUND

Patching or other interconnect systems are commonly used in communication networks in order to provide flexibility in implementing communication links. One example of a patching or interconnect system is a patch panel. A patch panel typically includes a panel in which a plurality of ports are formed or otherwise housed. Each port includes a "front" connector and a "rear" connector (or other attachment mechanism such as a punch-down block or permanently attached optical fiber). The port is configured to communicatively couple any cable attached to the front connector of that port to any cable that is attached to the rear of that port. Other patching systems are implemented in similar ways.

Many types of physical layer management (PLM) systems have been developed in order to keep track of which cables are attached to which ports of a patching system. In one type of system, each connector that is attached to a front connector of a patch panel has a radio frequency identification (RFID) tag attached to it. An RFID reader can then be used to wirelessly read an identifier from each connector's RFID tag in order to keep track of what connectors and cables are attached to the front connectors of the patch panel.

Conventional RFID PLM systems are typically used within an enterprise or a central office environment. As a result, such RFID PLM systems typically have convenient access to power for the active components of the RFID PLM. However, this is not always the case in the outside plant of a telecommunications network, where access to power is typically an issue. Consequently, such RFID PLM systems have not typically been used in the outside plant.

Publication US 2008/220721 A1 describes components, connectors, receptacles, cables, and systems wherein passive RFID functionality is incorporated. Also provided are passive RFID elements in general. The passive RFID elements power visual indicators based on receipt of external RF signals. Passive energy storage devices may be employed to provide electrical energy to the visual indicators. The passive energy storage devices may be charged by the external RF signals. The visual indicators may operate continuously or according to a predetermined flashing pattern.

Publication US 2011/008996 A1 describes a patch panel for a communications patching system that includes a plurality of connector ports. Each connector port is configured to detect insertion and removal of a patch cord. A controller is electrically coupled to the connector ports and monitors patch cord interconnections. An electronic display is positioned adjacent the connector ports and displays port identification information and real-time patch cord connection information for each respective connector port. The displayed patch cord connection information is dynamically updated by the controller as a patch cord is inserted or removed from a respective connector port.

### SUMMARY OF THE INVENTION

The above problems and disadvantages of the prior art are solved by the present invention as claimed in the independent claims. Advantageous and preferred embodiments of the invention are defined by the dependent claims.

One illustrative example for understanding the present invention is directed to a network element comprising an RFID tag integrated circuit and a first set of contacts electrically connected to the RFID tag integrated circuit. The network element is configured to hold a connector, the connector comprising a visual indicator. The first set of contacts is configured to physically touch a second set of contacts on the connector when the connector is held by the network element and to electrically connect the visual indicator of the connector to the RFID tag integrated circuit. The RFID tag integrated circuit is configured to power the visual indicator based on an RFID signal received and to cause the visual indicator to provide a visual indication under the control of the RFID tag integrated circuit.

Another illustrative example for understanding the present invention is directed to a connector assembly comprising a connector to attach the connector assembly to a cable, a visual indicator, and a first set of contacts electrically connected to the visual indicator. The connector assembly is configured to be held by a network element to which a corresponding RFID tag integrated circuit is attached. The first set of contacts is configured to physically touch a second set of contacts included in the network element when the connector assembly is held by the network element and to electrically connect the visual indicator of the connector assembly to the RFID tag integrated circuit. The visual indicator is configured to be powered by an RFID signal received by the RFID tag integrated circuit and to provide a visual indication under the control of the RFID tag integrated circuit.

Another illustrative example for understanding the present invention is directed to a network element comprising a visual indicator, and a first set of contacts electrically connected to the visual indicator. The network element is configured to hold a connector, the connector comprising an RFID tag integrated circuit. The first set of contacts is configured to physically touch a second set of contacts on the connector when the connector is held by the network element and to electrically connect the RFID tag integrated circuit of the connector to the visual indicator. The visual indicator is configured to be powered by an RFID signal received by the RFID tag integrated circuit and to provide a visual indication under the control of the RFID tag integrated circuit.

Another illustrative example for understanding the present invention is directed to a connector assembly comprising a connector to attach the connector assembly to a cable, an RFID tag integrated circuit attached to the connector, and a first set of contacts electrically connected to the RFID tag integrated circuit. The connector assembly is configured to be held by a network element to which a corresponding visual indicator is attached. The first set of contacts is configured to physically touch a second set of contacts included in the network element when the connector assembly is held by the network element and to electrically connect the RFID tag integrated circuit of the connector assembly to the visual indicator. The RFID tag integrated circuit is configured to power the visual indicator based on an RFID signal received and to cause the visual indicator to provide a visual indication under the control of the RFID tag integrated circuit.

Another illustrative example for understanding the present invention is directed to an RFID tag assembly comprising an RFID integrated circuit. The RFID tag assembly is configured to couple a visual indicator to the RFID integrated circuit, wherein the RFID integrated circuit is configured to power the visual indicator based on a first RFID signal received via a first antenna coupled to the RFID integrated circuit. The RFID tag assembly comprises a second antenna tuned to receive a second RF signal that is used for communications purposes.

Another illustrative example for understanding the present invention is directed to a method of carrying out an electronic work order, the method comprising generating an electronic work order, the electronic work order including an identifier for an RFID tag integrated circuit attached to an item involved in the electronic work order. The method further comprises interrogating the RFID tag integrated circuit attached to the item by broadcasting an RFID signal, and visually identifying the item using a visual indicator that is powered using the RFID signal when the RFID tag integrated circuit is transmitting a response to be interrogated.

Another illustrative example for understanding the present invention is directed to an apparatus comprising a translucent material, an RFID tag integrated circuit, and a visual indicator optically coupled to the translucent material and coupled to the RFID tag integrated circuit. The RFID tag integrated circuit is configured to power the visual indicator using an RFID signal receive at the RFID tag integrated circuit. The apparatus is configured to selectively visually illuminate the translucent material so as to provide a visual indication at a point that is remote from the visual indicator.

Another illustrative example for understanding the present invention is directed to a cable label tag comprising an adhesive-backed label configured to be wrapped around a cable, an RFID tag integrated circuit attached to the adhesive-back label, and a visual indicator that is electrically connected to the RFID tag integrated circuit and that is attached to the adhesive-back label. The RFID tag integrated circuit is configured to power the visual indicator using an RFID signal receive at the RFID tag integrated circuit.

Other illustrative examples for understanding the present invention are disclosed.

### DRAWINGS

FIGS. 1-2 are block diagrams illustrating various exemplary embodiments of RFID systems that include visual indicators.
FIGS. 3A-3B are block diagrams of one exemplary embodiment of an optical fiber pedestal for use with the visual indicator illumination techniques described here.
FIG. 4 is a flow diagram of one exemplary embodiment of a method of performing an electronic work order workflow using the optical fiber pedestal shown in FIGS. 3A-3B.
FIG. 5 illustrates an exemplary embodiment of a rack on which RFID-powered visual indicators have been attached.
FIGS. 6A-6F show an exemplary embodiment of an optical adapter and connector where both an RFID tag integrated circuit and a visual indicator are attached to the adapter.
FIG. 7 shows an exemplary embodiment of a network element with which the optical adapter and connector shown in FIGS. 6A-6F can be used.
FIGS. 8-9 shows an exemplary embodiment where a visual indicator is attached to a network element and an RFID integrated circuit is attached to an optical adapter.
FIG. 10 shows an exemplary embodiment of a network element having RFID integrated circuits attached above openings formed in the network element.
FIG. 11 is a top, plan view of an optical adapter having a visual indicator attached to the optical adapter and configured to be used with the network element shown in FIG. 10.
FIG. 12 shows an exemplary embodiment of an optical adapter including a switch that is configured to be triggered when a connector is properly and fully inserted into the adapter.
FIG. 13 is a top, plan view of an exemplary embodiment of an optical adapter configured to provide power to a visual indicator attached to an optical connector when inserted into the optical adapter.
FIG. 14 is a top, plan view of an exemplary embodiment of an optical connector having a visual indicator and configured to be inserted into the optical adapter of FIG. 13.
FIGS. 15A-15C shows an exemplary embodiment of a trans-reflective LCD RFID-powered visual indicator attached to a cable.
FIG. 16 shows an exemplary embodiment of a RFID reader used with the visual indicator shown in FIGS. 15A-15C.

### DETAILED DESCRIPTION

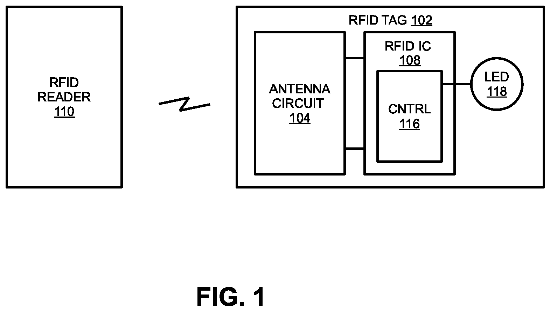

FIG. 1 is a block diagram of an exemplary embodiment of a RFID system 100 suitable for use with the visual indicator illumination techniques described here. The system 100 is especially well-suited for use in an RFID physical layer management system used in the outside of plant of a telecommunication service provider's network and/or other environments where access to power can be an issue; however, the system 100 and the visual indicator illumination techniques described here can be used in other PLM systems and other applications (including, without limitation, within an enterprise or central office environment and/or in environments where access to power is not an issue) as well as in other RFID systems and applications.

The system 100 comprises an assembly 102 that includes an RFID antenna circuit 104 and an RFID integrated circuit (IC) 108. In the exemplary embodiment shown in FIG. 1, the assembly 102 comprises an RFID tag 102. Although the RFID assembly 102 is described in connection with FIG. 1 as being implemented as an RFID tag, it is to be understood that the RFID assembly 102 can be implemented and packaged in other ways. For example, and without limitation, the RFID assembly 102 can be implemented, at least in part, as or using one or more printed circuit boards and/or can be integrated into a network element such as an optical adapter, adapter pack, patch panel, splice tray, etc. Moreover, as described below, the RFID assembly 102 can be implemented in a modular manner.

The RFID antenna 104 is used to receive and send a radio frequency (RF) signal with an RFID reader 110. In the exemplary embodiment shown in FIG. 1, the RFID antenna 104 comprises one or more inductive elements (for example, a coil or antenna) and one or more capacitive elements (for example, a capacitor), which form an LC circuit that is tuned to resonate at the particular RF frequency used by the RFID tag 102 and RFID reader 110.

The RFID reader 110 can be implemented in many ways. For example, the RFID reader 110 can be implemented using a handheld device that includes appropriate RFID reader functionality. For example, the handheld device can be a smartphone, PDA, or a handheld computer that is outfitted with RFID reader functionality. In this example, the RFID reader 110 is also configured to communicate with a larger physical layer management (PLM) system that is used to track connections made in the network using the item to which the RFID tag 102 is attached. The RFID reader 110 can communicate with the PLM system wirelessly (for example, over a cellular or wireless local area network link) or over a wired connection (for example, by connecting the RFID reader 110 to a network to which the PLM system is connected or by connecting the RFID reader 110 directly to the PLM system).

The RFID IC 108 implements the conventional functions of the RFID tag 102. For example, in the exemplary embodiment shown in FIG. 1, the RFID IC 108 collects power from the radio frequency interrogation signal received by the antenna circuit 104, demodulates the radio frequency interrogation signal received by the antenna circuit 104, responds to any information modulated onto the radio frequency interrogation signal transmitted by the RFID reader 110, stores information, and modulates information that is transmitted back to the RFID reader 110. In this exemplary embodiment, the RFID IC 108 implements a controller 116 that can also be programmed to carry out one or more functions described here as being performed by the RFID tag 102. The RFID IC 108 can be a part of a passive smart RFID IC 108. In other embodiments, a controller separate from the main RFID IC and/or the RFID tag itself can be coupled to the RFID IC.

The RFID tag 102 also includes a visual indicator 118. The controller 116 can use the visual indicator 118 to provide a visual indication to a user (for example, to indicate that the RFID tag 102 has been powered on or to indicate that the RFID tag 102 is the one indicated in a command transmitted by the RFID reader 110). In the exemplary embodiment shown in FIG. 1, the visual indicator 132 is implemented using at least one LED. In this embodiment, the LED 118 is powered using the power captured by the RFID IC 108 from the RFID interrogation signal supplied by the RFID reader 110, and the illumination of the LED 118 is controlled by the controller 116.

The visual indicator 118 can be implemented in other ways, for example, using electronic ink display technology (such as the electrophoretic display technology used in electronic reader devices such as the AMAZON KINDLE). Other types of visual indicators 118 can be used.

The following description refers to two different ways for an RFID reader 110 to interrogate the RFID tag 102. With the first way of interrogating the RFID tag 102 (also referred to here as "polling"), the RFID reader 110 encodes a command onto the RF interrogation signal it broadcasts that indicates that any RFID tag 102 receiving the RF signal should respond by transmitting at least some of the information stored in the RFID tag 102 back to the RFID reader 110. The transmitted information typically includes a unique identifier for that RFID tag 102 (also referred to here as the "tag identifier").

With the second way of interrogating the RFID tag 102 (also referred to here as "targeted interrogation"), the RFID reader 110 encodes onto the RF interrogation signal it broadcasts a command that includes the tag identifier for a specific RFID tag 102. The command indicates that any RFID tag 102 receiving the RF interrogation signal should check the tag identifier included in the command to see if that identifier matches the tag identifier for the receiving RFID tag 102. If they match, the RFID tag 102 responds by transmitting at least some of the information stored in that RFID tag 102 back to the RFID reader 110. If the tag identifier included in the command does not match the tag identifier for the receiving RFID tag 102, the receiving RFID tag 102 does not respond to the command.

That is, all receiving RFID tags 102 respond to a polling command, whereas only the RFID tag 102 specified in a targeted command responds to that command.

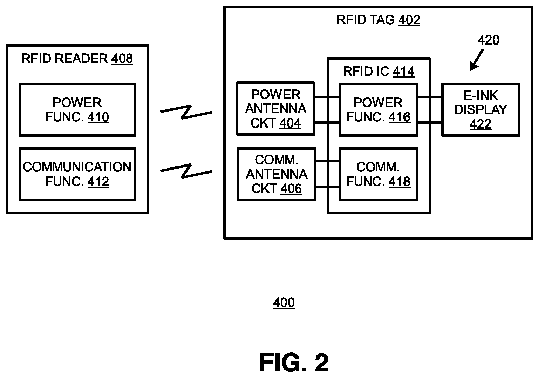

While FIG. 1 shows one example implementation of a visual indicator 118 for use in a RFID tag 102, it is to be understood that the visual indicator 118 can be implemented in other ways. In the exemplary embodiment described above in connection with FIG. 1, the RF signal that is used for powering the normal RFID communication functionality (for example, the RFID IC 108) is also used for powering the visual indicator that is included in or attached to the RFID tag. In other embodiments, more than one RF signal is received by an RFID tag, where one RF signal is used for powering the RFID tag and another RFID signal is used for communications. One such embodiment is shown in FIG. 2.

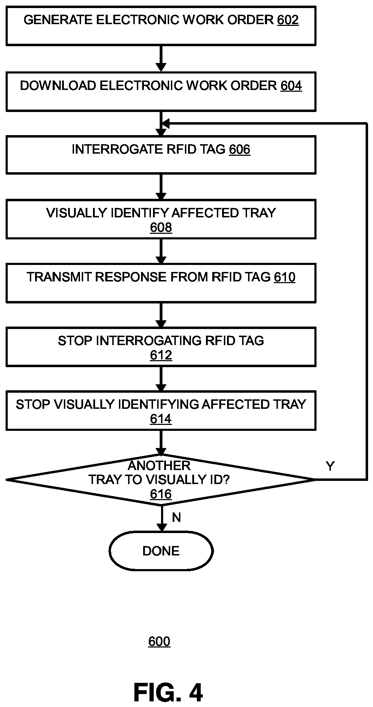

FIG. 2 is a block diagram of one exemplary embodiment of a RFID tag 402 that is configured to receive at least two RF signals. In the exemplary embodiment shown in FIG. 4, the RFID tag 402 includes a first antenna circuit 404 (also referred to here as the "power antenna circuit" 404) and a second antenna circuit 406 (also referred to here as the "communication antenna circuit" 406). The power antenna circuit 404 is tuned to receive a first RF signal (also referred to here as the "power RF signal" or "power signal") that is better for powering a visual indicator 420 included in the RFID tag 402, and the communication antenna circuit 406 is tuned to receive a second RF signal (also referred to here as the "communication RF signal" or "communication signal") that is better for carrying out conventional RFID communications.

Conventional RFID technology has been used with various frequency bands (for example, 120-150 KiloHertz (kHz) (low frequency (LF); unregulated band); 13.56 MegaHertz (MHz) (high frequency (HF); worldwide ISM band); 433 MHz (ultra-high frequency (UHF)); 868-870 MHz (Europe) or 902-928 MHz (North America) (UHF; ISM band); 2450-5800 MHz (microwave; ISM band); and 3.1-10 GigaHertz (GHz) (microwave; ultra wide band). Generally, the lower frequency bands have better power transfer characteristics (both from a regulatory and physical standpoint) whereas the higher frequency bands have higher data transmission characteristics. For example, around 5 Watts can be transferred to an RFID tag using the LF frequency bands, whereas only around 1-100 milliwatts can be transferred using the HF and UHF frequency bands.

In the exemplary embodiment shown in FIG. 2, the power antenna circuit 404 is tuned (using an appropriate tank or other antenna circuit) to receive a LF radio frequency signal where as the communication antenna circuit 406 is tuned (using an appropriate tank or other antenna circuit) to communicate using a microwave RF signal.

In the exemplary embodiment shown in FIG. 2, the RFID tag 402 can be used with an RFID reader 408 that includes power functionality 410 that is configured to transmit the power RF signal for powering the RFID tag 402 and communication functionality 412 that is configured to transmit and receive the communication RF signal used for conventional RFID communications with the RFID tag 402. Although the power functionality 410 and communication functionality 412 of the RFID reader 408 are shown separately in FIG. 2, it is to be understood that the power functionality 410 and communication functionality 412 can be implemented, at least in part, using the same devices or functionality.

In the exemplary embodiment shown in FIG. 2, the RFID tag 402 further includes a first RFID IC 414 (also referred to here as the "power RFID IC" 414). In this embodiment, the first antenna circuit 404 is coupled to the power functionality included in the power RFID IC 414 so that the power functionality can use the power RF signal to power the visual indicator 420. In this embodiment, the second antenna circuit 406 is coupled to a second RFID IC 416 (also referred to here as the "communication RFID IC" 416), which is configured to use the communication RF signal to carry out conventional RFID communications. Although the power RFID IC 414 and communication RFID IC 416 are shown separately in FIG. 2, it is to be understood that the power RFID IC 414 and communication RFID IC 416 can be implemented, at least in part, using the same devices or functionality.

The RFID tag 402 further comprises a visual indicator 420. By using a power RF signal that can deliver a relatively higher amount of power, a visual indicator 420 that requires a relatively higher amount of power can be used, even if higher data communication are needed. For example, in the exemplary embodiment shown in FIG. 2, the visual indicator 420 is implemented using an electronic ink display 422 (such as the electrophoretic display technology used in electronic reader devices such as the AMAZON KINDLE). The electronic ink display 422 can be used to display alphanumeric messages as a part of a visual indication. The visual indicator 420 can be implemented in other ways (for example, using one or more LEDs).

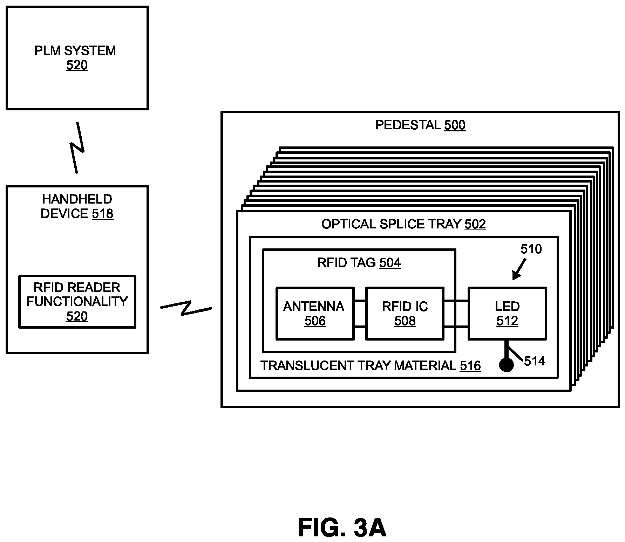

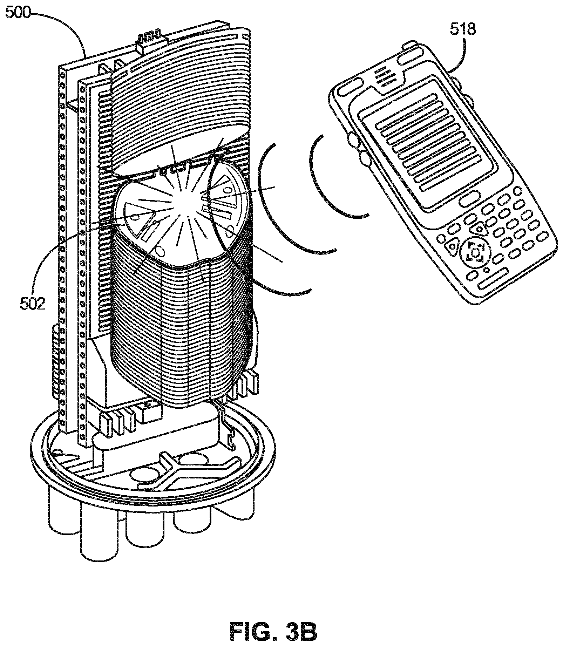

A visual indictor that is powered by an RFID interrogation signal (as described above) can be used in a physical layer management (PLM) system. FIGS. 3A-3B are block diagrams of one exemplary embodiment of an optical fiber pedestal 500 in which the visual indication technology described here can be used. FIGS. 3A-3B are collectively referred to here as "FIG. 3".

In this exemplary embodiment, the optical fiber pedestal 500 is configured to hold a large number of optical splice trays 502. In this exemplary embodiment, as shown in FIG. 3B, the optical splice trays 502 are stacked and are connected to the pedestal 500 using hinges that enable a technician move the trays 502 up and down in order to access a particular tray 502 to work on it. The pedestal 500 is configured for use in the outside plant of a telecommunication service provider. The trays 502 and pedestal 500 are housed within a suitable removable enclosure (not shown).

Also, in this example, each tray 502 is prewired at the factory with a fiber cable bundle (not shown) that breaks out into individual fiber stubs or pigtails to which splices can be made in the field at that tray 502.

In this exemplary embodiment, the pedestal 500 is not connected to the main AC power grid. Therefore, conventional visual indicators that require a connection to the main AC power grid cannot be used. However, the visual indicator techniques described here can be used. In particular, the visual indicator techniques described here are used to implement electronic work order workflows.

As shown in FIG. 3A, in this example, each optical splice tray 502 includes an RFID assembly 504. As with the examples described above, the RFID assembly 504 shown in FIGS. 3A-3B is described here as being implemented as an RFID tag, though it is to be understood that the RFID assembly can be implemented and packaged in other ways. Each RFID tag 504 includes an antenna circuit 506 that is configured to receive and transmit an RF signal with an RFID reader. The antenna circuit 506 is tuned to the particular RF frequency used for powering the RFID tag 504 and for communicating between the RFID tag 504 and the RFID reader.

In this exemplary embodiment (as shown in FIG. 3A), the RFID tag 504 on each tray 502 also includes an RFID IC 508. In this example, the RFID IC 508 implements the modulator function (which is used to modulate data onto the RFID signal received from an RFID reader) as well as the other conventional RFID functions described above (for example, the RFID power and communication functions).

The RFID tag 504 on each tray 502 further comprises a visual indicator 510 (shown in FIG. 3A). In the exemplary embodiment shown in FIG. 3, the visual indicator 510 is implemented using an LED 512 that is coupled to the RFID IC 508, which provides power to the LED 512 in order to illuminate the LED 512 as described below. In this exemplary embodiment, each optical splice tray 502 includes a light pipe 514 which optically couples the LED 512 to the translucent material 516 used to form at least some of that optical splice tray 502. The LED 512, light pipe 514, and translucent tray material 516 are configured in order to cause the translucent tray material 516 to be illuminated when the LED 512 is illuminated. When the LED 512 (and as a result, the translucent tray material 516) is illuminated, a technician near the pedestal 500 should be able to visually identify that tray 502 via such illumination.

In the exemplary embodiment shown in FIG. 3, the RFID reader is implemented using a handheld device 518 that includes appropriate RFID reader functionality 520. For example, the handheld device 518 can be a smartphone, PDA, or a handheld computer that is outfitted with RFID reader functionality 520.

As noted above, the visual indicators 510 implemented in each of the trays 502 of the optical fiber pedestal 500 can be used to implement an electronic work order workflow. In this exemplary embodiment, a physical layer management (PLM) system 520 generates an electronic work order that is to be carried out by a technician. The electronic work order is downloaded to the handheld device 518. In this example, the electronic work order is downloaded to the handheld device 518 wirelessly (for example, using cellular or wireless local area network wireless communications).

One example of an electronic work order workflow that can be carried out using the optical fiber pedestal 500 and handheld device 518 is shown in FIG. 4.

FIG. 4 is a flow diagram of one exemplary embodiment of a method 600 of performing an electronic work order. The exemplary embodiment of method 600 shown in FIG. 4 is described here as being implemented using the optical fiber pedestal 500 and handheld device 518 shown in FIG. 3, though it is to be understood that other embodiments can be implemented in other ways.

Method 600 comprises generating an electronic work order (block 602). In this example, the PLM system 520 is used to generate and track electronic work orders. When a connection needs to moved, added, or otherwise changed (also referred to as a "MAC") at the optical fiber pedestal 500, the PLM system 520 generates an electronic work order that specifies the pedestal 500 and the trays 502, fiber cable bundles, and fiber pigtails used to carry out that MAC. In this example, the pedestal 500 and each tray 502, fiber cable bundle, and fiber pigtail as well as any other optical fibers terminated at that pedestal 500 includes a its own label that has a respective identifier printed on it. This label is referred to here as the "printed label". However, in this example, so many optical splice trays 502 are typically housed in each pedestal 500 (for example, 120 or more) and are typically stacked in such a compact space that it can be difficult to identify a particular optical splice tray 502 using just the printed label. Identifying a particular optical splice tray 502 typically requires a technician to individually flip through all of the trays 502 in order to check the printed label for each tray 502. This can take significant time. Also, it is typically desirable to reduce the number of times the trays 502 are flipped in order to reduce the likelihood that splices made using the trays 502 will be damaged as a result of moving the trays 502.

The electronic work order specifies the geographic address of the optical pedestal 500 as well as the printed identifier for the pedestal 500 involved in that electronic work order. The electronic work order can include other information about the pedestal 500 (for example, pictures of, or manuals for, the model of pedestal 500 involved, pictures of the specific pedestal 500 involved as installed in its current location, and/or information about gaining physical access to the pedestal 500 or the site where it is installed, and removing the cover of the pedestal 500).

Each electronic work order also provides step-by-step directions for carrying out each MAC. The electronic work order specifies, for each step, the printed identifier for the pedestal 500, tray 502, fiber cable bundle, and pigtail involved in carrying out that step. Also, in this example, the electronic work order, for each step, specifies the tag identifier for the RFID tag 504 included in the optical splice tray 502 involved in carrying out that step.

Method 600 further comprises downloading the electronic work order to the handheld device 518 (block 604). As noted above, the electronic work order can be wirelessly downloaded to the handheld device 518.

Then, the technician views the electronic work order using the handheld device 518 and uses the information provided in the electronic work order to travel to the pedestal 500 and remove its cover.

Then, for each step of the electronic work order that involves that pedestal 500, the handheld device 518 is used to visually identify the tray 502 involved in that step. This is done as shown in blocks 606-610 of method 600.

Method 600 further comprises interrogating the RFID tag 504 of the affected tray 502 (block 606). This is done by having the technician position the handheld device 518 near the trays 502 and using the user interface of the handheld device 518 to cause the RFID functionality 520 included in the handheld device 518 to broadcast an RF signal. The broadcast RF signal has encoded thereon a targeted command that includes the tag identifier of the RFID tag 504 for the affected tray 502.

Method 600 further comprises visually identifying the affected tray 502 using the visual indicator 510 (block 608). In this example, this is done by illuminating the translucent tray material 516 in the affected tray 502 using the LED 512 included in that tray 502. In response to the RF signal being broadcast, those RFID tags 504 that are sufficiently close to the handheld device 518 will be energized by the broadcast RF signal. The RFID IC 508 in each such RFID tag 504 demodulates the received RF signal and checks the targeted command encoded in that RF signal to see if the tag identifier included in that command matches the tag identifier for that RFID tag 504. If it does, the RFID IC 508 causes the LED 512 in that tray 502 to illuminate, which in turn causes the translucent tray material 516 in that tray 502 to be illuminated by the light emitted from the LED 512 (via the light pipe 514). If the tag identifier included in the targeted command does not match the tag identifier for the receiving RFID tag 504, the RFID IC 508 does not cause the LED 512 in that tray 502 to illuminate and, therefore, the translucent tray material 516 in that tray 502 is not illuminated.

The illumination of the translucent tray material 516 of the tray 502 involved in the current step-while not illuminating the translucent tray material 516 of the other trays 502-enables a technician to visually identify the involved tray 502 and to flip directly to that tray 502 in order to carry out the operation specified in the current step. One example of this is shown in FIG. 3B. In this way, the technician need not individually flip through the trays 502 in the pedestal 500 in order to identify the affected tray 502.

Also, in the exemplary embodiment shown in FIG. 4, method 600 further comprises transmitting a response from the RFID tag 504 included in the affected tray 502 in response to being interrogated (block 610). The handheld device 518 receives this response and can use it, for example, to confirm that the affected tray 502 has been identified. Also, this response can include information that is used by the handheld device 518 for other purposes.

The handheld device 518 is configured to continue to broadcast the RF signal (and, thereby, power the RFID tag 504 and LED 512 of the involved tray 502) for so long as the technician wishes (for example, until the technician has identified the affected tray 502). Method 600 further comprises stopping the interrogation of the RFID tag 504 in the affected tray 502 when it is no longer desirable to illuminate the affected tray 502 (block 612) thereby stopping the visual illumination of the affected tray 502 using the visual indicator 510 (block 614). In this example, this is done by having the handheld device 518 stop broadcasting the RFID signal, which results in the RFID tag 504 in the affected tray 502 powering down thereby causing the LED 512 to turn off. This causes the translucent tray material 516 to no longer be illuminated.

The processing associated with blocks 606-614 is repeated for each tray 502 that needs to be identified to carry out the current electronic work (block 616).

Work orders can be processed in other ways. For example, when a group of MACs need to be carried out at a given pedestal 500, the PLM system 520 can be configured to arrange the steps of the work order so that if a single tray 502 is involved in more than one MAC, all steps that are performed using that tray 502 occur in succession so that the tray 502 does not need to be identified multiple times. Other electronic work order optimizations may be used with the visual identification techniques described here.

Moreover, the RFID visual techniques can be used to visually identify other items at the pedestal 500 (for example, the pedestal 500 itself, cable bundles, pigtails, fibers, as well features within the tray 502 or pedestal 500 such as splice holders, fiber guides and spools, and strain relief points).

The RFID visual indication techniques described here can be used and implemented in other ways.

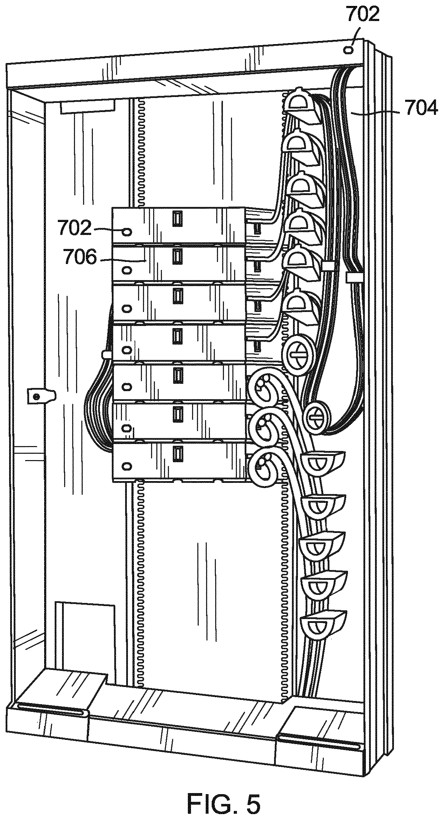

One such example is shown in FIG. 5. For example, RFID tags or other assemblies 702 that include an RFID-powered visual indicator (such as an LED) can be attached to a rack 704 and each subrack 706 housed within the rack 704. Such racks 704 and subracks 706 can be used to hold fiber trays, patch panels, and other interconnect structures. These visual indicators can be used to guide a technician to those racks and subracks in connection with carrying out an electronic work order.

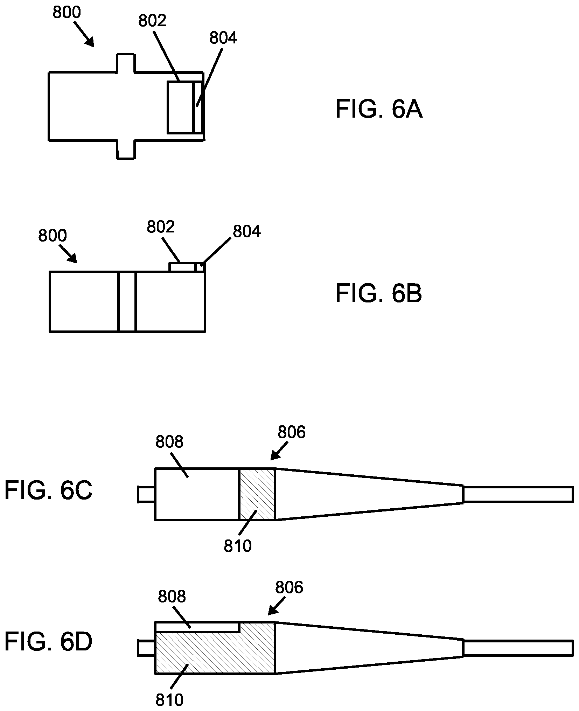

Also, an RFID tag or other assembly that includes an RFID-powered visual indicator (such as an LED) can be attached to connectors that are used for communicatively coupling communication cables together. Examples of such connectors include connectors that are used for communicatively coupling copper cables together (for example, copper twisted-pair cables with RJ-45 connectors) and connectors that are used for communicatively coupling optical cables together. In one such example, one of the connectors is implemented using a fiber adapter that configured to mechanically hold, and optically couple, two optical connectors together (where each of the connectors terminate a respective optical fiber). One such example is shown in FIGS. 6A-6F. FIG. 6A shows a top, plan view of an optical adapter 800 having an RFID assembly that includes an tag integrated circuit 802 and a visual indicator 804 (an LED 804 in this case) where both the RFID tag integrated circuit 802 and the visual indicator 804 are both attached to the adapter 800. FIG. 6B is a side view of the adapter 800 shown in FIG. 6A.

In this example, the adapter 800 comprises a simplex SC adapter that is configured to mechanically hold and optically couple two SC connectors to one another (where each SC connector terminates a respective optical cable comprising an optical fiber). It is to be understood, however, that other types of optical adapters could be used. The LED 804 of the RFID tag integrated circuit 802 are disposed at the end of the adapter 800.

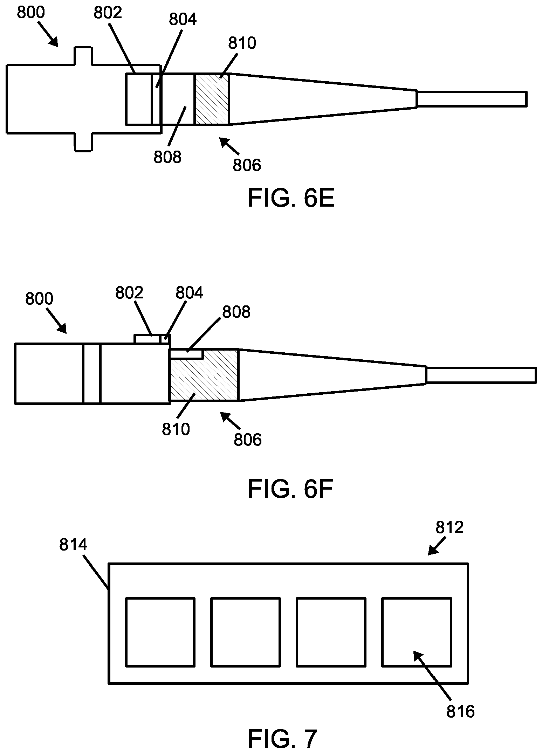

However, when such an adapter 800 is inserted into an adapter pack, patch panel, or other network element (one example of which is shown in FIG. 7), the LED 804 may not be visible while the adapter 800 is held in the adapter pack (especially in high density versions). Also, an optical connector 806, when inserted into an adapter 800, may obscure the LED 804.

FIG. 6C is a top, plan view of a connector 806 that includes a light guide material 808 included in the connector housing 810. FIG. 6D is a side view of the connector 806 shown in FIG. 6C. FIG. 6E is a top, plan view of the adapter 800 shown in FIG. 6A with the connector 806 shown in FIG. 6C inserted into it. FIG. 6F is a side view of the adapter 800 and connector 806 shown in FIG. 6E.

The connector 806 and the light guide material 808 are configured so that the light guide material 808 can be lit up by the LED 804 when the connector 806 is inserted into the adapter 800 and the LED 804 is illuminated by an RFID reader as described above. In this way, the visual indication provided by the LED 804 can be more easily seen when the adapter 800 is held in the adapter pack 812 (or other network element) and a connector 806 is inserted into the adapter 800.

One example of a network element 812 into which adapter 800 can be inserted is shown in FIG. 7. In the example shown in FIG. 7, the network element 812 is implemented as an adapter pack 812, but it is to be understood that the network element 812 can be implemented in other ways.

As shown in FIG. 7, the adapter pack 812 includes a panel 814 in which various openings 816 are formed. An optical adapter 800 can be inserted into an opening 816 and held in place by a clip (not shown) around the adapter 800.

In the embodiment FIGS. 6A-6F, the visual indicator is packaged with the rest of the RFID assembly. However, in some applications, it may be helpful to position the visual indicator and the RFID tag integrated circuit in different locations (for example, one position may be more convenient for viewing the visual indicator and another position may be more convenient for reading the RFID tag IC).

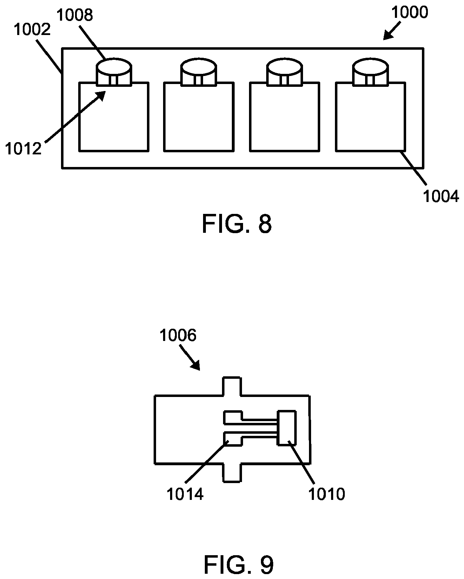

FIGS. 8-9 shows an exemplary embodiment where the visual indicator (an LED in these examples) is separated from the RFID IC. In this exemplary embodiment, a network element 1000 is implemented as an adapter pack 1000 (shown in FIG. 8), but it is to be understood that the network element 1000 can be implemented in other ways. The adapter pack 1000 includes a panel 1002 in which multiple openings 1004 are formed. Each opening 1004 is sized and configured to hold a respective optical adapter 1006 (shown in FIG. 9). Each optical adapter 1006 is implemented in this example using an SC simplex adapter that is surrounded by a clip (not shown) to hold the adapter 1006 in the opening 1004 of the adapter pack 1000.

In this exemplary embodiment, a respective RFID assembly of the type described above is used for each optical adapter 1006 where a respective visual indicator 1008 (a LED in this case) is illuminated by a RFID interrogation signal. However, in this exemplary embodiment, the visual indicator 1008 is physically separated from the RFID tag IC 1010 for the RFID assembly. Specifically, in this embodiment, the LED 1008 is attached to the panel 1002 and is positioned above each opening 1004 where an adapter 1006 is inserted. The LED 1010 has a pair of contacts 1012 that extends into the opening 1004 and is configured to come into physical contact with an corresponding pair of electrical contacts 1014 (shown in FIG. 9) located on the adapter 1006. The contacts 1014 located on the adapter 1006 are electrically connected to the RFID tag IC 1010 (shown in FIG. 9) that is attached to the adapter 1006. These contacts 1012 and 1014 enable the RFID tag IC 1010 on the adapter 1006 to illuminate the LED 1008 above the opening 1004 by providing electrical power from the RFID tag IC 1010 to the LED 1008 in the manner described above. In this way, the RFID tag IC 1010 can be positioned away from the LED 1008 so that the LED 1008 can be positioned where it is more visible when the adapter 1006 is inserted into the adapter pack 1000 and when a connector is inserted into the adapter 1006.

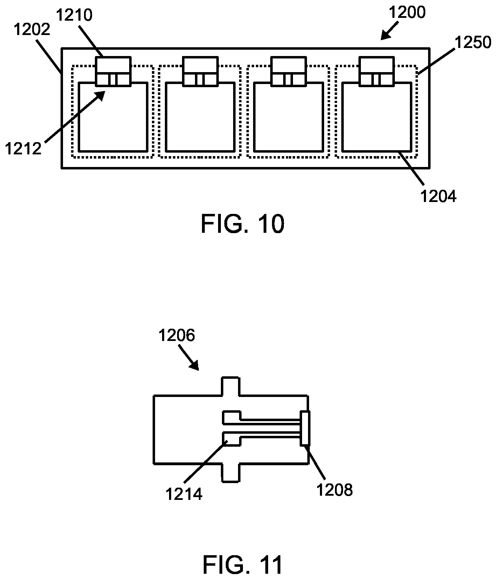

However, since the adapters 1006 are removable and the adapter pack 1000 (or other network element) is typically fixed in place, it may be more desirable to swap the position of the RFID tag IC and LEDs. One such example is shown in FIGS. 10-11. In this example, the network element 1200 (implemented as an adapter pack 1200) shown in FIG. 10 and the optical adapter 1206 shown in FIG. 11 are generally the same as the adapter pack 1000 and adapter 1006 described above in connection with FIGS. 8-9, except as described below. The elements of the exemplary embodiment shown in FIGS. 10-11 that are similar to corresponding elements of the exemplary embodiment shown in FIGS. 8-9 are referenced in FIGS. 10-11 using the same reference numerals used in FIGS. 8-9 but with the leading two numerals changed from "10" to a "12". Except as described below, the description of the elements set forth above in connection with the exemplary embodiment shown in FIGS. 8-9 applies to the corresponding elements of the exemplary embodiment shown in FIGS. 10-11 but generally will not be repeated in connection with FIGS. 10-11 for the sake of brevity.

In this example, an RFID tag IC 1210 is positioned above each opening 1204 where an adapter 1206 is inserted into the adapter pack 1200. The RFID tag IC 1210 has a pair of contacts 1212 that extends into the opening 1204 and is configured to come into physical contact with a pair of electrical contacts 1214 located on the adapter 1206. The contacts 1214 located on the adapter 1206 are electrically connected to an LED 1208 attached to the adapter 1206. These contacts 1212 and 1214 enable the RFID tag IC 1210 on the panel 1202 to illuminate the LED 1208 on the adapter 1206 by providing power to the LED 1208 in the manner described above. In order to make the light produced from the LED 1208 more visible when a connector is inserted into the adapter 1206, a connector of the type described above in connection FIGS. 6A-6F can be used. As described above in connection with FIGS. 6A-6F, the connector 806 and the light guide material 808 are configured so that the light guide material 808 can be lit up by the LED 1208 when the connector 806 is inserted into the adapter 1206 and the LED 1208 is illuminated using an RFID reader. Also, in this exemplary embodiment, a coil 1250 can be formed around each opening 1204 in the panel 1202 to serve as the antenna for the RFID tag IC 1210 positioned above that opening 1204.

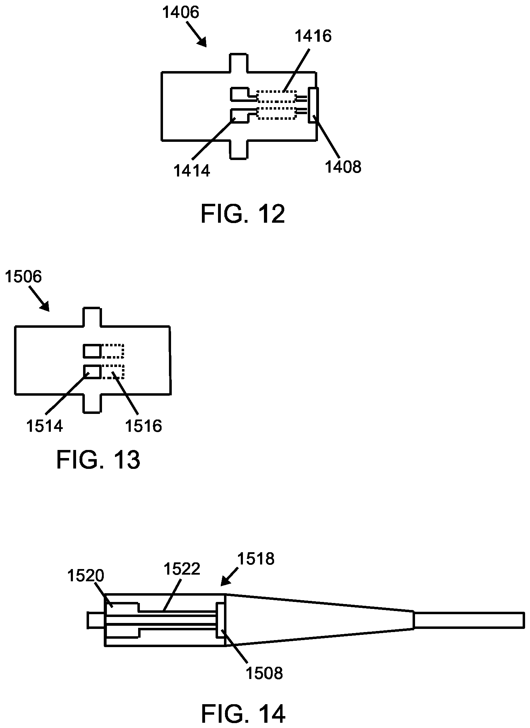

A variation of the exemplary embodiment shown in FIGS. 10-11 is shown in FIG. 12. In the variation shown in FIG. 12, an adapter 1406 is used with the adapter pack 1200 shown in FIG. 10 where an RFID tag IC 1210 is positioned above each opening 1204 with contacts 1212 extending into the opening 1204. As with the adapter 1206 shown in FIG. 11, a pair of contacts 1414 is located on the adapter 1406 shown in FIG. 12 and is electrically connected to an LED 1408 that is attached to the adapter 1406. In the example shown in FIG. 12, a bi-stable switch 1416 is used to electrically couple the contacts 1414 to the LED 1408. The switch 1416 is disposed on the adapter 1406 and is configured to be triggered (closed) when a connector is properly and fully inserted into the opening of the adapter 1406.

When an adapter 1406 is inserted into an opening 1204 of the adapter pack 1200, the contacts 1414 on the adapter 1406 will physically touch the contacts 1212 connected to the RFID tag IC 1210 positioned over the opening 1204. Then, when a connector is properly and fully inserted into the adapter 1406, the switch 1416 will close and electrically couple the contacts 1212 to the LED 1408. When this occurs, if an RFID reader is used to interrogate the RFID tag IC 1210 associated with the adapter 1406, power will be provided to the LED 1408 as described above in order to illuminate the LED 1408.

When a connector is not properly and fully inserted into the opening of the adapter 1406, the switch 1416 will be open and the contacts 1212 will not be electrically coupled to the LED 1408. As a result, if an RFID reader is used to interrogate the RFID tag IC 1210 associated with the adapter 1406, power will not be provided to the LED 1408 due to the open switch 1416 and the LED 1408 will not illuminate.

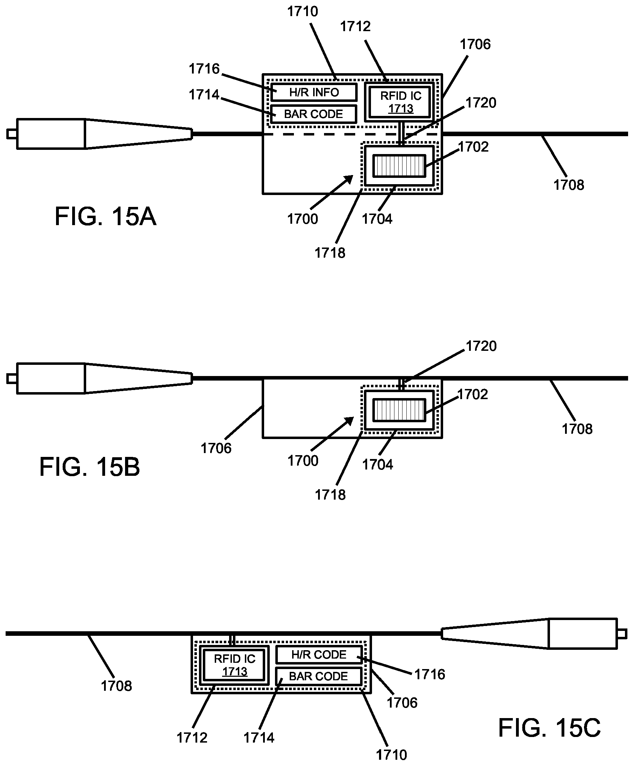

Another variation of the exemplary embodiment shown in FIGS. 10-11 is shown in FIGS. 13-14. In the variation shown in FIGS. 15-16, an adapter 1506 is used with the adapter pack 1200 shown in FIG. 10 where an RFID tag IC 1210 is positioned above each opening 1204 with contacts 1212 extending into the opening 1204. As with the adapter 1206 shown in FIG. 11, a pair of contacts 1514 is located on the adapter 1506 shown in FIG. 13. However, with this variation, the LED 1508 is attached to the rear of a connector 1518 that is inserted into the adapter 1506. The LED 1508 on the connector 1518 is electrically coupled to the contacts 1514 on the top of the adapter 1506 by a pair of contacts 1516 that are located inside the adapter 1506. The contacts 1516 are configured to physically touch a pair of contacts 1520 located on the connector 1518 when the connector 1518 is inserted into the adapter 1506. The contacts 1520 on the connector 1518 are electrically connected to the LED 1508 by a pair of traces 1522.

When an adapter 1506 is inserted into an opening 1204 of the adapter pack 1200, the contacts 1514 on the adapter 1506 will physically touch the contacts 1212 connected to the RFID tag IC 1210 positioned over the opening 1204. Then, when a connector 1518 is properly and fully inserted into the adapter 1506, the contacts 1520 on the top of the connector 1518 will physically touch the contacts 1516 inside the adapter 1506 and electrically couple the contacts 1212 to the LED 1508 attached to the connector 1518. When this occurs, if an RFID reader is used to interrogate the RFID tag IC 1210 associated with the adapter 1506, power will be provided to the LED 1508 as described above in order to illuminate the LED 1508.

Some of the embodiments described above make use of visual indicators that are implemented using LEDs. However, LEDs typically require a relatively high amount of power (for example, on the order of tens of milliwatts). To supply this amount of power, as noted above, the RFID reader can be brought into close proximity to the corresponding RFID antenna and/or a separate power RFID signal and antenna can be used. However, in some applications, it may be desirable to avoid having to do either of these things (for example, where longer read ranges are desirable or where it is desirable to avoid the expense and weight of adding separate power RFID functionality to the RFID reader and each RFID tag). Also, LEDs typically are not visible outdoors in daylight.

One example of an RFID-powered visual indicator that addresses these issues uses low cost and low power trans-reflective liquid crystal display (LCD) technology. A single trans-reflective LCD segment can be used for each visual indicator. The LCD segment is placed against a trans-reflective backing material.

Such an LCD segment acts as a shutter that provides a visual indication by creating a dark segment that is visible against the rest of the trans-reflective material. When the shutter is opened, the LCD segment does not block light from passing and the segment is not visible against the rest of the trans-reflective material; when the shutter is closed, the LCD segment blocks light from passing and the segment will appear as a dark shape against the rest of the trans-reflective material. In this way, a visual indication can be provided.

In general, a group of LCD visual indicators can be used. In one example, an RFID reader is first used to broadcast an appropriate command that causes all of the LCD visual indicators to open their LCD shutters. Then, a visual indication can be provided by using the RFID reader to send one or more targeted RFID commands that cause one or more LCD shutters to close in order to produce one or more dark shapes, which should be visible against the backing material.

During daylight conditions, the trans-reflective backing material will reflect sufficient light for the segment to be easily visible.

The backing material can also incorporate glow-in-the-dark material to support use during nighttime or low light conditions. During nighttime or low light conditions, after each LCD shutter is opened during the first step noted above, the glow-in-the-dark material in the backing can be energized by flashing ultra violet (UV) light on all of the visual indicators (for example, using a dual visible light/UV light LED flashlight). After energizing the backing material, closing an LCD shutter should produce a dark shape that is visible against the glowing backing material. The backing material typically glows for a long time (for example, many hours), which should be sufficient to carry out many visual indications using a single "charge" of the backing material.

This LCD approach can also be used to implement a "lamp test" function to check that all of the LCD shutters and associated RFID tags are working correctly. During the first step noted above (where all the visual indicators have their LCD shutters opened), any LCD shutter that is stuck in the closed state will produce a dark segment that is visible.

These LCD visual indicators typically require lower power than LEDs (for example, microwatts of power instead of tens of milliwatts). As a result, separate power RFID functionality in the RFID reader and each RFID tag will typically not be needed. Also, the RFID reader typically will not need to be placed in close proximity to the RFID tag and can be used for long-range reading of the RFID tags (for example, from 3 meters away as opposed to around 10 centimeters away).

One example of such a trans-reflective LCD RFID-powered visual indicator 1700 is shown in FIGS. 15A-15C. In the example shown in FIGS. 15A-15C, a flexible trans-reflective LCD segment 1702 (and associated glow-in-the-dark trans-reflective backing material 1704) is incorporated into a label tag 1706 formed from an adhesive-backed material that can be wrapped around a cable 1708 or affixed to another surface or structure (such as a network element in a communication network).

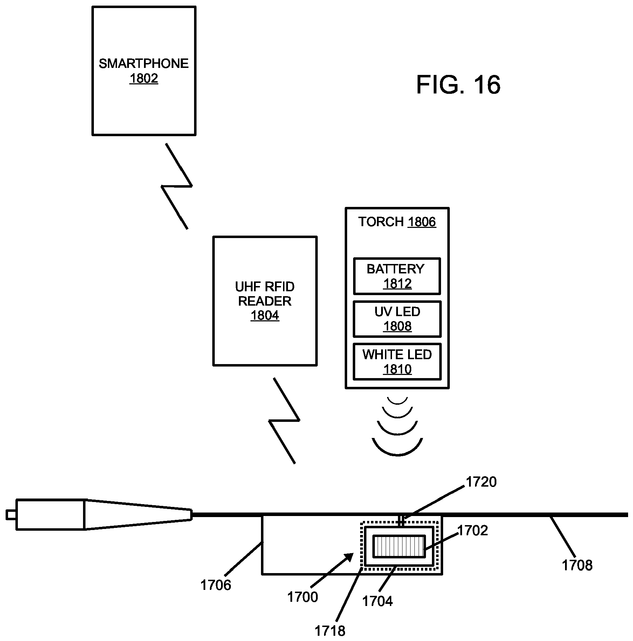

As shown in FIGS. 15A-15C, the label tag 1706 comprises three labels - a first adhesive-backed label 1710 that incorporates the RFID tag assembly 1712 as well as a 2D/3D bar code 1714 and human-readable (H/R) information 1716, a second adhesive-backed label 1718 that incorporates the LCD visual indicator 1700, and a third, thin adhesive-backed label 1706 that incorporates one or more conductive traces 1720 that couple the RFID tag assembly 1712 (more specifically, the RFID tag integrated circuit 1713) to the LCD visual indicator 1700. Thus, with this example, the visual indicator 1700 can be remotely positioned from the RFID tag assembly 1712. Also, with this example, the human-readable information 1716 can be read by the naked eye, the bar code 1714 can be read using a bar code reader (not shown), and/or the RFID IC 1713 can be read using an RFID reader 1804 (shown in FIG. 16).

As shown in FIG. 16, an RFID reader 1804 can be used to broadcast an RFID signal to the RFID tag assembly 1712 as described above to both read the RFID tag integrated circuit 1713 included in the RFID tag assembly 1712 and to provide power to the LCD visual indicator 1700. Information read from the RFID tag integrated circuit 1713 included in the RFID tag assembly 1712 can be communicated from the RFID reader 1804 to a smartphone or other mobile communication device 1802 (for example, over a BLUETOOTH wireless connection). The smartphone 1802 can then communicate the information read from the RFID tag integrated circuit 1713 to a PLM system using, for example, a cellular or wireless local area network connection. Also, a specially designed torch 1806 can be used. In this example, the torch 1806 includes both a white LED 1810 for illuminating the LCD visual indicator 1700 in daylight conditions and an ultraviolet (UV) LED 1808 for charging the glow-in-the-dark backing material 1704 in nighttime conditions. The torch 1806 also includes a battery 1812 for providing power to the LEDs 1808 and 1810.

Such a label tag 1706 can also incorporate a self-destruct mode to provide an anti-tamper function for the label tag 1706, which can make it difficult to clone it.

This example label tag 1706 has the advantage that it is flexible and will move and bend with the cable 1708 to which it is attached (as opposed to LED-based visual indicators, which will typically be attached to rigid PCBs or similar rigid structures). Also, LCD technology is mature and easy to obtain and build in production lines.

Moreover, this label tag 1706 does not require any modification to the connector or cable to which it is attached and can be retrofitted onto any existing cabling system. The label tag 1706 can also be applied to other structures (for example, stuck to the outer surface of an enclosure, rack, cover, etc.). As noted above, the LCD visual indicator 1700 can be used to provide visual indication in both daylight and nighttime conditions.

Furthermore, this label tag 1706 has the ability to be "thumbed" in a bundle of cables without damaging the visual indicator that is providing a visual indication.

A number of embodiments have been described. Nevertheless, it will be understood that various modifications to the described embodiments may be made without departing from the scope of the claimed invention. Also, combinations of the individual features of the above-described embodiments are considered within the scope of the inventions disclosed here.

### ILLUSTRATIVE EXAMPLES FOR UNDERSTANDING THE PRESENT INVENTION

Example 1 includes a network element comprising an RFID tag integrated circuit; and a first set of contacts electrically connected to the RFID tag integrated circuit; wherein the network element is configured to hold a connector, the connector comprising a visual indicator; wherein the first set of contacts is configured to physically touch a second set of contacts on the connector when the connector is held by the network element and to electrically connect the visual indicator of the connector to the RFID tag integrated circuit; wherein the RFID tag integrated circuit is configured to power the visual indicator based on an RFID signal received and to cause the visual indicator to provide a visual indication under the control of the RFID tag integrated circuit.
Example 2 includes the network element of Example 1, wherein the network element comprises a panel in which at least one opening is formed, wherein the panel and the opening are configured to hold the connector, and wherein the RFID tag integrated circuit is attached to the panel near the opening.
Example 3 includes the network element of any of Examples 1-2, wherein the connector comprises an optical adapter to which at least one optical connector can be connected.
Example 4 includes the network element of any of Examples 1-3, wherein the network element comprises a tray, wherein the tray is configured to hold the connector.
Example 5 includes the network element of any of Examples 1-4, wherein the network element comprises at least one of an adapter pack, patch panel, and splice tray.
Example 6 includes a connector assembly comprising: a connector to attach the connector assembly to a cable; a visual indicator; and a first set of contacts electrically connected to the visual indicator; wherein the connector assembly is configured to be held by a network element to which a corresponding RFID tag integrated circuit is attached; wherein the first set of contacts is configured to physically touch a second set of contacts included in the network element when the connector assembly is held by the network element and to electrically connect the visual indicator of the connector assembly to the RFID tag integrated circuit; wherein the visual indicator is configured to be powered by an RFID signal received by the RFID tag integrated circuit and to provide a visual indication under the control of the RFID tag integrated circuit.
Example 7 includes the connector assembly of Example 6, wherein the visual indicator comprises a light emitting diode.
Example 8 includes the connector assembly of Example 7, wherein the optical connector comprises a light guide material, wherein the optical adapter and optical connector are configured to optically couple the light guide material to the light emitting diode when the optical connector is inserted into the optical adapter, wherein the light guide material is disposed so as to provide a visual indicator at a point that is remote from the light emitting diode.
Example 9 includes the connector assembly of any of Examples 6-8, wherein the connector comprises an optical adapter into which an optical connector can be inserted.
Example 10 includes a network element comprising: a visual indicator; and a first set of contacts electrically connected to the visual indicator; wherein the network element is configured to hold a connector, the connector comprising an RFID tag integrated circuit; wherein the first set of contacts is configured to physically touch a second set of contacts on the connector when the connector is held by the network element and to electrically connect the RFID tag integrated circuit of the connector to the visual indicator; wherein the visual indicator is configured to be powered by an RFID signal received by the RFID tag integrated circuit and to provide a visual indication under the control of the RFID tag integrated circuit.
Example 11 includes the network element of Example 10, wherein the network element comprises a panel in which at least one opening is formed, wherein the panel and the opening are configured to hold the connector, and wherein the visual indicator is attached to the panel near the opening.
Example 12 includes the network element of any of Examples 10-11, wherein the connector comprises an optical adapter to which at least one optical connector can be connected.
Example 13 includes the network element of any of Examples 10-12, wherein the network element comprises a tray, wherein the tray is configured to hold the connector.
Example 14 includes the network element of any of Examples 10-13, wherein the network element comprises at least one of an adapter pack, patch panel, and splice tray.
Example 15 includes the network element of any of Examples 10-14, wherein the visual indicator comprises a light emitting diode.
Example 16 includes a connector assembly comprising: a connector to attach the connector assembly to a cable; an RFID tag integrated circuit attached to the connector; and a first set of contacts electrically connected to the RFID tag integrated circuit; wherein the connector assembly is configured to be held by a network element to which a corresponding visual indicator is attached; wherein the first set of contacts is configured to physically touch a second set of contacts included in the network element when the connector assembly is held by the network element and to electrically connect the RFID tag integrated circuit of the connector assembly to the visual indicator; wherein the RFID tag integrated circuit is configured to power the visual indicator based on an RFID signal received and to cause the visual indicator to provide a visual indication under the control of the RFID tag integrated circuit.
Example 17 includes the connector assembly of Example 16, wherein the connector comprises an optical adapter into which an optical connector can be inserted.
Example 18 includes an RFID tag assembly comprising: an RFID integrated circuit; and wherein the RFID tag assembly is configured to couple a visual indicator to the RFID integrated circuit, wherein the RFID integrated circuit is configured to power the visual indicator based on a first RFID signal received via a first antenna coupled to the RFID integrated circuit; wherein the RFID tag assembly comprises a second antenna tuned to receive a second RF signal that is used for communications purposes.
Example 19 includes the RFID tag assembly of Example 18, wherein the RFID tag assembly is configured so that the visual indicator provides a visual indication when the RFID integrated circuit is transmitting data.
Example 20 includes the RFID tag assembly of any of Examples 18-19, wherein the visual indicator comprises a light emitting diode that is illuminated when the RFID tag assembly has received sufficient power to illuminate the light emitting diode.
Example 21 includes the RFID tag assembly of any of Examples 18-20, wherein the visual indicator comprises a light emitting diode, an electronic ink display, or a liquid crystal display.
Example 22 includes the RFID tag assembly of any of Examples 18-21, wherein the visual indicator is configured to display a message.
Example 23 includes a method of carrying out an electronic work order, the method comprising: generating an electronic work order, the electronic work order including an identifier for an RFID tag integrated circuit attached to an item involved in the electronic work order; interrogating the RFID tag integrated circuit attached to the item by broadcasting an RFID signal; and visually identifying the item using a visual indicator that is powered using the RFID signal when the RFID tag integrated circuit is transmitting a response to be interrogated.
Example 23 includes the method of Example 23, further comprising downloading the electronic work order to a handheld device, wherein the handheld device is used to interrogate the RFID tag integrated circuit.
Example 24 includes the method of any of Examples 23-24, wherein the item comprises a tray that is formed at least in part using a material that can be illuminated by the visual indicator, wherein visually identifying the item comprises illuminating the material.
Example 26 includes an apparatus comprising: a translucent material; an RFID tag integrated circuit; and a visual indicator optically coupled to the translucent material and coupled to the RFID tag integrated circuit; wherein the RFID tag integrated circuit is configured to power the visual indicator using an RFID signal receive at the RFID tag integrated circuit; and wherein the apparatus is configured to selectively visually illuminate the translucent material so as to provide a visual indication at a point that is remote from the visual indicator.
Example 27 includes the apparatus of Example 26, wherein the translucent material comprises a light pipe.
Example 28 includes the apparatus of any of Examples 26-27, wherein the apparatus comprises one of an optical splice tray and an optical connector.
Example 29 includes a cable label tag comprising: an adhesive-backed label configured to be wrapped around a cable; an RFID tag integrated circuit attached to the adhesive-back label; and a visual indicator that is electrically connected to the RFID tag integrated circuit and that is attached to the adhesive-back label; wherein the RFID tag integrated circuit is configured to power the visual indicator using an RFID signal receive at the RFID tag integrated circuit.
Example 30 includes the cable label tag of Example 29, further comprising at least one of human-readable information and a bar code.
Example 31 includes the cable label tag of any of Examples 29-30, wherein the visual indicator comprises a trans-reflective backing material and a shutter, wherein the cable label tag is configured to provide a visual indicator by actuating the shutter.
Example 32 includes the cable label tag of Example 31, wherein the trans-reflective backing material comprises a glow-in-dark material.

### LIST OF REFERENCE NUMERALS AND CORRESPONDING FEATURES

- 100: RFID system
- 102: RFID tag
- 104: RFID antenna circuit
- 108: RFID integrated circuit
- 110: RFID reader
- 116: controller
- 118: visual indicator
- 402: RFID tag
- 404: power antenna circuit
- 406: communication antenna circuit
- 408: RFID reader
- 410: power functionality
- 412: communication functionality
- 414: power RFID integrated circuit
- 416: communication RFID integrated circuit
- 420: visual indicator
- 422: electronic ink display
- 500: optical fiber pedestal
- 502: optical splice trays
- 504: RFID tag
- 506: antenna circuit
- 508: RFID integrated circuit
- 510: visual indicator
- 512: light emitting diode
- 514: light pipe
- 516: translucent material
- 518: handheld device
- 520: RFID reader functionality
- 702: RFID tag
- 704: rack
- 706: subracks
- 800: adapter
- 802: RFID integrated circuit
- 804: light emitting diode
- 806: optical connector
- 808: light guide material
- 810: connector housing
- 812: network element
- 814: panel
- 816: opening
- 1000: network element
- 1002: panel
- 1004: openings
- 1006: optical adapter
- 1008: visual indicator
- 1010: RFID tag integrated circuit
- 1200: network element
- 1202: panel
- 1204: openings
- 1206: optical adapter
- 1208: visual indicator
- 1210: RFID tag integrated circuit
- 1212: contacts
- 1214: contacts
- 1250: coil
- 1406: optical adapter
- 1408: visual indicator
- 1414: contacts
- 1416: switch
- 1506: optical adapter
- 1508: visual indicator
- 1514: contacts
- 1516: contacts
- 1518: connector
- 1520: contacts
- 1522: traces
- 1700: LCD RFID-powered visual indicator
- 1702: LCD segment
- 1704: glow-in-the-dark trans-reflective backing material
- 1706: label tag
- 1708: cable
- 1710: first adhesive-backed label
- 1712: RFID tag assembly
- 1713: RFID integrated circuit
- 1714: 2D/3D bar code
- 1716: human-readable information
- 1718: second adhesive-backed label
- 1720: conductive traces
- 1802: mobile communication device
- 1804: RFID reader
- 1806: torch
- 1808: ultraviolet LED
- 1810: white LED
- 1812: battery

## Claims

1. A network element and connector assembly comprising:
the network element including a first set of contacts (1012, 1212);
the connector assembly including a connector (1006, 1206) having a second set of contacts (1014, 1214), the connector (1006, 1206) attaching the connector assembly to a cable, the network element (1012, 1212) being configured to receive and hold the connector (1006, 1206) such that the first set of contacts (1012, 1212) of the network element (1000, 1200) come into physical contact with the second set of contacts (1014, 1214) of the connector (1006, 1206) when the connector (1006, 1206) is inserted into the network element (1000, 1200);
**characterized in that**
one of the network element (1000, 1200) and the connector assembly includes an RFID tag integrated circuit (1010, 1210), a respective one of the first set of contacts (1012, 1212) and the second set of contacts (1014, 1214) being electrically connected to the RFID tag integrated circuit (1010, 1210);
another one of the network element (1000, 1200) and the connector assembly includes a visual indicator (1008, 1208), a respective one of the first set of contacts (1012, 1212) and the second set of contacts (1014, 1214) being electrically connected to the visual indicator (1008, 1208); and
wherein the first set of contacts (1000, 1212) and the second set of contacts (1014, 1214) are configured to electrically connect the RFID tag integrated circuit (1010, 1210) to the visual indicator (1008, 1208) when the connector (1006, 1206) of the connector assembly is held by the network element (1000, 1208) such as to enable the RFID tag integrated circuit (1010, 1210) to power the visual indicator (1008, 1208) based on an RFID signal received and to cause the visual indicator (1008, 1208) to provide a visual indication under the control of the RFID tag integrated circuit (1010, 1210).

2. The network element and connector assembly of claim 1, wherein the network element (1200) comprises a panel (1202) in which at least one opening (1204) is formed, wherein the panel (1202) and the opening (1204) are configured to hold the connector (1206), and wherein the RFID tag integrated circuit (1210) is attached to the panel (1202) near the opening (1204).

3. The network element and connector assembly of any one of claims 1 and 2, wherein the connection assembly includes the visual indicator (1208).

4. The network element and connector assembly of any one of claims 1 to 3, wherein the visual indicator (1208) comprises a light emitting diode and/or wherein the connector (1206) comprises an optical adapter into which an optical connector can be inserted.

5. The network element and connector assembly of claim 4, wherein the optical connector comprises a light guide material, wherein the optical adapter and optical connector are configured to optically couple the light guide material to the light emitting diode when the optical connector is inserted into the optical adapter, wherein the light guide material is disposed so as to provide a visual indicator at a point that is remote from the light emitting diode.

6. The network element and connector assembly of claim 1, wherein the connection assembly includes the RFID tag integrated circuit (1010).

7. The network element and connector assembly of any one of claims 1 and 6, wherein the network element comprises a panel (1002) in which at least one opening (1004) is formed, wherein the panel (1002) and the opening (1004) are configured to hold the connector (1006), and wherein the visual indicator (1008) is attached to the panel (1002) near the opening (1004).

8. The network element and connector assembly of any one of claims 1, 6 and 7, wherein the connector (1006) comprises an optical adapter to which at least one optical connector can be connected.

9. The network element and connector assembly of claim 1 or any one of claims 6 to 8, wherein the network element (1000) comprises a tray, wherein the tray is configured to hold the connector (1006), or wherein the network element (1000) comprises at least one of an adapter pack, patch panel (1002), and splice tray (502).

10. The network element and connector assembly of any one of claims 6 to 9, wherein the visual indicator (1008) comprises a light emitting diode.

11. The network element and connector assembly of claim 1, wherein the connector assembly includes the RFID tag integrated circuit (1010) attached to the connector (1006).

12. The network element and connector assembly of claim 11, wherein the connector (1006) comprises an optical adapter into which an optical connector can be inserted.

13. A method of carrying out an electronic work order, the method comprising:
generating an electronic work order, the electronic work order including an identifier for an RFID tag integrated circuit attached to an item involved in the electronic work order or attached to a network element configured to hold the item;
interrogating the RFID tag integrated circuit by broadcasting an RFID signal; and
visually identifying the item using a visual indicator that is provided on the network element or on the item, respectively, wherein the visual indicator is electrically coupled to the RFID tag integrated circuit when the network element holds the item so that the visual indicator is powered using the RFID signal when the RFID tag integrated circuit is transmitting a response to be interrogated.

14. The method of claim 13, further comprising downloading the electronic work order to a handheld device (518), wherein the handheld device (518) is used to interrogate the RFID tag integrated circuit.

15. The method of claim 13, wherein the item comprises a tray (502) that is formed at least in part using a material (516) that can be illuminated by the visual indicator (512), wherein visually identifying the item comprises illuminating the material (516).

## Patentansprüche

1. Netzwerkelement und Steckverbinderanordnung, umfassend:
das Netzwerkelement, das einen ersten Satz aus Kontakten (1012, 1212) aufweist;
die Steckverbinderanordnung, die einen Steckverbinder (1006, 1206) mit einem zweiten Satz aus Kontakten (1014, 1214) beinhaltet, wobei der Steckverbinder (1006, 1206) die Steckverbinderanordnung an einem Kabel befestigt, wobei das Netzwerkelement (1012, 1212) dazu konfiguriert ist, den Steckverbinder (1006, 1206) aufzunehmen und so zu halten, dass der erste Satz aus Kontakten (1012, 1212) des Netzwerkelements (1000, 1200) in physischen Kontakt mit dem zweiten Satz aus Kontakten (1014, 1214) des Steckverbinders (1006, 1206) kommt, wenn der Steckverbinder (1006, 1206) in das Netzwerkelement (1000, 1200) eingesetzt wird;
**dadurch gekennzeichnet, dass**
eines aus dem Netzwerkelement (1000, 1200) und der Steckverbinderanordnung eine integrierte Schaltung mit RFID-Etikett (1010, 1210) beinhaltet, jeweils einer aus dem ersten Satz von Kontakten (1012, 1212) und dem zweiten Satz aus Kontakten (1014, 1214) elektrisch mit der integrierten Schaltung mit RFID-Etikett (1010, 1210) verbunden ist;
ein weiteres aus dem Netzwerkelement (1000, 1200) und der Steckverbinderanordnung einen optischen Anzeiger (1008, 1208) beinhaltet, jeweils einer aus dem ersten Satz von Kontakten (1012, 1212) und dem zweiten Satz aus Kontakten (1014, 1214) elektrisch mit dem optischen Anzeiger (1008, 1208) verbunden ist; und
wobei der erste Satz aus Kontakten (1000, 1212) und der zweite Satz aus Kontakten (1014, 1214) dazu konfiguriert sind, die integrierte Schaltung mit RFID-Etikett (1010, 1210) mit dem optischen Anzeiger (1008, 1208) zu verbinden, wenn der Steckverbinder (1006, 1206) der Steckverbinderanordnung von dem Netzwerkelement (1000, 1208) gehalten wird, so dass die integrierte Schaltung mit RFID-Etikett (1010, 1210) den optischen Anzeiger (1008, 1208) basierend auf einem empfangenen RFID-Signal mit Strom versorgen und den optischen Anzeiger (1008, 1208) dazu veranlassen kann, unter der Steuerung der integrierten Schaltung mit RFID-Etikett (1010, 1210) eine optische Anzeige bereitzustellen.

2. Netzwerkelement und Steckverbinderanordnung nach Anspruch 1, wobei das Netzwerkelement (1200) eine Frontplatte (1202) umfasst, in der mindestens eine Öffnung (1204) ausgebildet ist, wobei die Frontplatte (1202) und die Öffnung (1204) dazu konfiguriert sind, den Steckverbinder (1206) zu halten, und wobei die integrierte Schaltung mit RFID-Etikett (1210) nahe der Öffnung (1204) an der Frontplatte (1202) befestigt ist.

3. Netzwerkelement und Steckverbinderanordnung nach einem der Ansprüche 1 und 2, wobei die Steckverbinderanordnung den optischen Anzeiger (1208) beinhaltet.

4. Netzwerkelement und Steckverbinderanordnung nach einem der Ansprüche 1 bis 3, wobei der optische Anzeiger (1208) eine lichtemittierende Diode umfasst und/oder wobei der Steckverbinder (1206) einen optischen Adapter umfasst, in den ein optischer Steckverbinder eingesetzt werden kann.

5. Netzwerkelement und Steckverbinderanordnung nach Anspruch 4, wobei der optische Steckverbinder ein Lichtleitermaterial umfasst, wobei der optische Adapter und der optische Steckverbinder dazu konfiguriert sind, das Lichtleitermaterial optisch mit der lichtemittierenden Diode zu verbinden, wenn der optische Steckverbinder in den optischen Adapter eingesetzt wird, wobei das Lichtleitermaterial so angeordnet ist, dass es einen optischen Anzeiger an einem Punkt bereitstellt, der von der lichtemittierenden Diode entfernt ist.

6. Netzwerkelement und Steckverbinderanordnung nach Anspruch 1, wobei die Steckverbinderanordnung eine integrierte Schaltung mit RFID-Etikett (1010) beinhaltet.

7. Netzwerkelement und Steckverbinderanordnung nach einem der Ansprüche 1 und 6, wobei das Netzwerkelement eine Frontplatte (1002) umfasst, in der mindestens eine Öffnung (1004) ausgebildet ist, wobei die Frontplatte (1002) und die Öffnung (1004) dazu konfiguriert sind, den Steckverbinder (1006) zu halten, und wobei die optische Anzeige (1008) nahe der Öffnung (1004) an der Frontplatte (1002) befestigt ist.

8. Netzwerkelement und Steckverbinderanordnung nach einem der Ansprüche 1, 6 und 7, wobei der Steckverbinder (1006) einen optischen Adapter umfasst, mit dem mindestens ein Steckverbinder verbunden werden kann.

9. Netzwerkelement und Steckverbinderanordnung nach Anspruch 1 oder einem der Ansprüche 6 bis 8, wobei das Netzwerkelement (1000) ein Fach umfasst, wobei das Fach dazu konfiguriert ist, den Steckverbinder (1006) zu halten, oder wobei das Netzwerkelement (1000) mindestens eines aus einem Adaptersatz, Buchsenfeld (1002) und einem Spleißträger (502) umfasst.

10. Netzwerkelement und Steckverbinderanordnung nach einem der Ansprüche 6 bis 9, wobei der optische Anzeiger (1008) eine lichtemittierende Diode umfasst.

11. Netzwerkelement und Steckverbinderanordnung nach Anspruch 1, wobei die Steckverbinderanordnung eine integrierte Schaltung mit RFID-Etikett (1010) beinhaltet, die an dem Steckverbinder (1006) befestigt ist.

12. Netzwerkelement und Steckverbinderanordnung nach Anspruch 11, wobei der Steckverbinder (1006) einen optischen Adapter umfasst, in den ein optischer Steckverbinder eingesetzt werden kann.

13. Verfahren zum Ausführen eines elektronischen Arbeitsauftrags, wobei das Verfahren umfasst:
Erzeugen eines elektronischen Arbeitsauftrags, wobei der elektronische Arbeitsauftrag eine Kennung für eine integrierte Schaltung mit RFID-Etikett beinhaltet, das an einem Element befestigt ist, welches in den elektronischen Arbeitsauftrag involviert ist, oder an einem Netzwerkelement befestigt ist, welches dazu konfiguriert ist, das Element zu halten;
Abfragen der integrierten Schaltung mit RFID-Etikett durch Rundsenden eines RFID-Signals; und
optisches Identifizieren des Elements unter Verwendung eines optischen Anzeigers, der an dem Netzwerkelement bzw. an dem Element bereitgestellt ist, wobei der optische Anzeiger elektrisch mit der integrierten Schaltung mit RFID-Etikett verbunden ist, wenn das Netzwerkelement das Element hält, so dass der optische Anzeiger unter Verwendung des RFID-Signals mit Strom versorgt wird, wenn die integrierte Schaltung mit RFID-Etikett eine Antwort sendet, die abzufragen ist.

14. Verfahren nach Anspruch 13, des Weiteren umfassend das Herunterladen des elektronischen Arbeitsauftrags an eine Handheld-Vorrichtung (518), wobei die Handheld-Vorrichtung (518) dazu verwendet wird, die integrierte Schaltung mit RFID-Etikett abzufragen.

15. Verfahren nach Anspruch 13, wobei das Element ein Fach (502) umfasst, das zumindest zum Teil unter Verwendung eines Materials (516) ausgebildet ist, welches von dem optischen Anzeiger (512) beleuchtet werden kann, wobei das optische Identifizieren des Elements das Beleuchten des Materials (516) umfasst.

## Revendications

1. Elément de réseau et un ensemble connecteur comprenant:
l'élément de réseau comprenant un premier jeu de contacts (1012, 1212);
l'ensemble connecteur comprenant un connecteur (1006, 1206) ayant un second jeu de contacts (1014, 1214), le connecteur (1006, 1206) reliant l'ensemble connecteur à un câble, l'élément de réseau (1012, 1212) étant configuré pour recevoir et maintenir le connecteur (1006, 1206) de telle sorte que le premier jeu de contacts (1012, 1212) de l'élément de réseau (1000, 1200) entre en contact physique avec le second jeu de contacts (1014, 1214) du connecteur (1006, 1206) lorsque le connecteur (1006, 1206) est introduit dans l'élément de réseau (1000, 1200);
**caractérisé en ce que**
l'un des éléments de réseau (1000, 1200) et l'ensemble connecteur comprend un circuit intégré d'étiquette RFID (1010, 1210), l'un respectif du premier jeu de contacts (1012, 1212) et le second jeu de contacts (1014, 1214) étant électriquement connecté au circuit intégré d'étiquette RFID (1010, 1210);
un autre de l'élément de réseau (1000, 1200) et de l'ensemble connecteur comprend un indicateur visuel (1008, 1208), l'un respectif du premier jeu de contacts (1012, 1212) et du second jeu de contacts (1014, 1214) étant connecté électriquement à l'indicateur visuel (1008, 1208); et
dans lequel le premier jeu de contacts (1000, 1212) et le second jeu de contacts (1014, 1214) sont configurés pour connecter électriquement le circuit intégré d'étiquette RFID (1010, 1210) à l'indicateur visuel (1008, 1208) lorsque le connecteur (1006, 1206) de l'ensemble connecteur est maintenu par l'élément de réseau (1000, 1208) de manière à permettre au circuit intégré d'étiquette RFID (1010, 1210) d'alimenter l'indicateur visuel (1008, 1208) sur la base d'un signal RFID reçu et pour conduire l'indicateur visuel (1008, 1208) à fournir une indication visuelle sous le contrôle du circuit intégré d'étiquette RFID (1010, 1210).

2. Elément de réseau et ensemble connecteur selon la revendication 1, dans lequel l'élément de réseau (1200) comprend un panneau (1202) dans lequel au moins une ouverture (1204) est formée, dans laquelle le panneau (1202) et l'ouverture (1204) sont configurés pour maintenir le connecteur (1206), et
dans lequel le circuit intégré d'étiquette RFID (1210) est fixé au panneau (1202) à proximité de l'ouverture (1204).

3. Elément de réseau et ensemble connecteur selon l'une quelconque des revendications 1 et 2, dans lequel l'ensemble connecteur comprend l'indicateur visuel (1208).

4. Elément de réseau et ensemble connecteur selon l'une quelconque des revendications 1 à 3, dans lequel l'indicateur visuel (1208) comprend une diode électroluminescente et/ou dans lequel le connecteur (1206) comprend un adaptateur optique dans lequel un connecteur optique peut être introduit.

5. Elément de réseau et ensemble connecteur selon la revendication 4, dans lequel le connecteur optique comprend un matériau de guide de lumière, dans lequel l'adaptateur optique et le connecteur optique sont configurés pour coupler optiquement le matériau de guide de lumière à la diode électroluminescente lorsque le connecteur optique est introduit dans l'adaptateur optique, dans lequel le matériau de guide de lumière est disposé de manière à fournir un indicateur visuel à un endroit éloigné de la diode électroluminescente.

6. Elément de réseau et ensemble connecteur selon la revendication 1, dans lequel l'ensemble connecteur comprend le circuit intégré d'étiquette RFID (1010).

7. Elément de réseau et ensemble connecteur selon l'une quelconque des revendications 1 et 6, dans lequel l'élément de réseau comprend un panneau (1002) dans lequel au moins une ouverture (1004) est formée,
dans lequel le panneau (1002) et l'ouverture (1004) sont configurés pour maintenir le connecteur (1006), et dans lequel l'indicateur visuel (1008) est fixé au panneau (1002) à proximité de l'ouverture (1004).

8. Elément de réseau et ensemble connecteur selon l'une quelconque des revendications 1, 6 et 7, dans lequel le connecteur (1006) comprend un adaptateur optique auquel au moins un connecteur optique peut être connecté.

9. Elément de réseau et ensemble connecteur selon la revendication 1 ou l'une quelconque des revendications 6 à 8, dans lequel l'élément de réseau (1000) comprend un plateau, dans lequel le plateau est configuré pour maintenir le connecteur (1006), ou dans lequel l'élément de réseau (1000) comprend au moins un élément parmi un ensemble adaptateur, un panneau de connexion (1002) et un plateau d'épissure (502).

10. Elément de réseau et ensemble connecteur selon l'une quelconque des revendications 6 et 9, dans lequel l'indicateur visuel (1008) comprend une diode électroluminescente.

11. Elément de réseau et ensemble connecteur selon la revendication 1, dans lequel l'ensemble connecteur comprend le circuit intégré d'étiquette RFID (1010) fixé au connecteur (1006).

12. Elément de réseau et ensemble connecteur selon la revendication 11, dans lequel le connecteur (1006) comprend un adaptateur optique dans lequel un connecteur optique peut être introduit.

13. Procédé d'exécution d'un ordre de travail électronique, le procédé consistant à:
générer un ordre de travail électronique, l'ordre de travail électronique comprenant un identifiant pour un circuit intégré d'étiquette RFID fixé à un article impliqué dans l'ordre de travail électronique ou fixé à un élément de réseau configuré pour contenir l'article;
interroger le circuit intégré d'étiquette RFID en diffusant un signal RFID; et
identifier visuellement l'article en utilisant un indicateur visuel qui est fourni sur l'élément de réseau ou sur l'article, respectivement, dans lequel l'indicateur visuel est couplé électriquement au circuit intégré d'étiquette RFID lorsque l'élément de réseau maintient l'article de sorte que l'indicateur visuel est alimenté en utilisant le signal RFID lorsque le circuit intégré d'étiquette RFID transmet une réponse à interroger.

14. Procédé selon la revendication 13, comprenant en outre le téléchargement de l'ordre de travail électronique dans un dispositif portable (518), dans lequel le dispositif portable (518) est utilisé pour interroger le RFID circuit intégré d'étiquette.

15. Procédé selon la revendication 13, dans lequel l'article comprend un plateau (502) qui est formé au moins en partie en utilisant un matériau (516) qui peut être éclairé par l'indicateur visuel (512), dans lequel l'identification visuelle de l'article consiste à éclairer le matériau (516).
